# EUROPEAN PATENT SPECIFICATION

(11) **EP 1 843 540 B1**
(45) Date of publication and mention of the grant of the patent: **07.01.2009**
(21) Application number: 06251891.5
(22) Date of filing: 04.04.2006
(51) Int. Cl.: H04L 29/06

(54) **Method and apparatus for updating encryption keys on a mobile communication device**
Verfahren und Vorrichtung für das Aktualisieren der kryptographischen Schlüssel in einem mobilen Kommunikationsgerät
Méthode et dispositif pour renouvellement des clés de chiffrage dans un dispositif de communication mobile

(43) Date of publication of application: 10.10.2007
(73) Proprietor: Research In Motion Limited, Waterloo, Ontario N2L 3W8 (CA)
(72) Inventor: Puri, Ajay, Brampton, Ontario L6Y 5G6 (CA)
(74) Representative: Hibbert, Juliet Jane Grace

(56) References cited:
- EP-A- 0 720 399
- EP-A- 1 517 566
- WO-A-00/22802
- ANONYMOUS: "Standards Proposal No. SP-3-4742-RV4, proposed revision of an existing TIA Standard Over the Air Service Provisioning of Mobile Stations in Spread Spectrum Systems (if approved, to be published as TIA-683-D)" EIA/TIA STANDARDS AND DRAFTS, TELECOMMUNICATIONS INDUSTRY ASSOCIATION, ARLINGTON, VA, US, 15 November 2004 (2004-11-15), XP017000133

## Description

### TECHNICAL FIELD OF THE APPLICATION

The present disclosure generally relates to wireless packet data service networks. More particularly, and not by way of any limitation, the present disclosure is directed to a mobile communications device and related data service network employing a method and apparatus operable to timely and efficiently update encryption keys employed for communication between the mobile communication device and a plurality of communication nodes.

### BACKGROUND

The present disclosure is directed toward key generation of a mobile communication device with respect to communication with a plurality of communication nodes. It is known in the art to provide communication sessions between a mobile communication device and multiple communication nodes according to a variety of communication systems. It is further known in the art to conduct periodic authentication of a mobile communication device in order to ensure that a device engaged in communication with a node is correctly identified. Additionally, it is known to employ encryption algorithms to provide secure communications between a mobile communication device and another communication node.

EP-A-1 517 566 relates to a demand-based update provisioning for a mobile communication device in which a provisioning server receives a provisioning update request.

EIA/TIA standards and drafts, telecommunication industry association, IS/11/04 XP017000133 relates to technical requirements for OTA provisioning. WO 00/22802A relates to a method for intermediation of calls, and EP-A-0 720 399 relates to a scheme for storing call requests at a network node.

The present invention is set out in the independent claims. Some optional features are set out in the claims dependent thereto.

### BRIEF DESCRIPTION OF THE DRAWINGS

A more complete understanding of the embodiments of the present disclosure may be had by reference to the following Detailed Description when taken in conjunction with the accompanying drawings wherein:

Figure 1 depicts an exemplary network environment including a wireless packet data service network wherein an embodiment of the present disclosure may be practiced;

Figure 2 depicts a software architectural view of a mobile communications device operable to manage encryption keys employed for secured communications;

Figure 3 depicts a block diagram of a mobile communications device operable to manage encryption keys employed for secured communications according to one embodiment;

Figure 4 depicts a block diagram of a mobile communication device showing a key generation request storage structure;

Figure 5 depicts an exemplary message flow diagram showing the flow of messages between a mobile communication device and remote nodes during secure communications; and

Figure 6 depicts a flow chart showing a process for managing encryption key generation requests according to one embodiment.

### DETAILED DESCRIPTION

A method and apparatus of the present disclosure will now be described with reference to various examples of how the embodiments can best be made and used. Identical reference numerals are used throughout the description and several views of the drawings to indicate identical or corresponding parts, wherein the various elements are not necessarily drawn to scale.

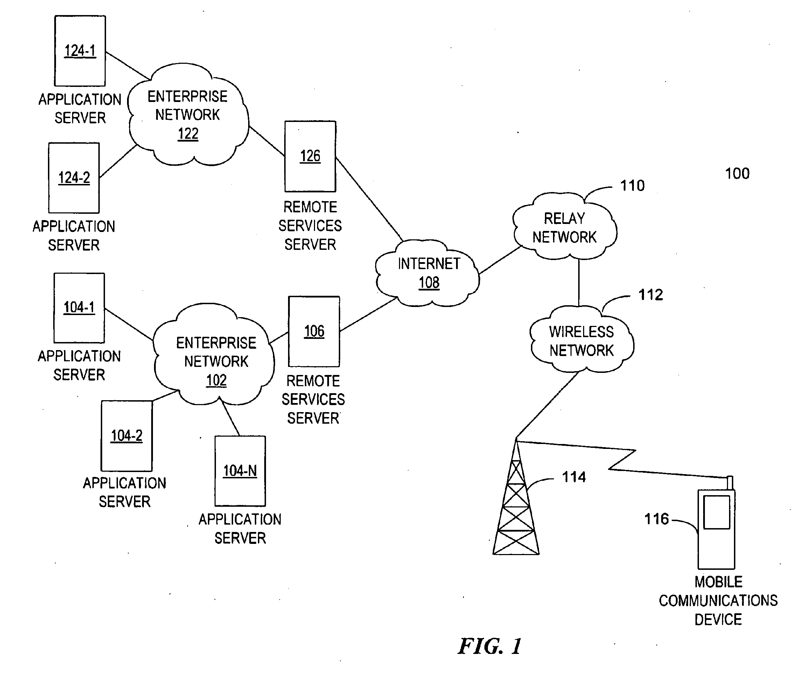

Referring now to the drawings, and more particularly to Figure 1, depicted therein is an exemplary network environment 100 including a wireless packet data service network 112 wherein an embodiment of the present disclosure may be practiced. Network environment 100 includes enterprise networks 102, 122. Enterprise networks 102, 122 which may be packet-switched networks, can each include one or more geographic sites and be organized as a local area network (LAN), wide area network (WAN) or metropolitan area network (MAN), et cetera, for serving a plurality of corporate users.

A number of application servers 104-1 through 104-N disposed as part of the enterprise network 102 are operable to provide or effectuate a host of internal and external services such as email, video mail, Internet access, corporate data access, messaging, calendaring and scheduling, information management, and the like. Application servers 124-1, 124-2 have a similar functionality within enterprise network 122. Accordingly, a diverse array of personal information appliances such as desktop computers, laptop computers, palmtop computers, et cetera, although not specifically shown in Figure 1, may be operably networked to one or more of the application servers 104-i, i = 1, 2,...,N, with respect to the services supported in the enterprise network 102. Similar functionality exists with respect to application servers 124-1, 124-2 of enterprise network 122.

Additionally, remote services servers 106, 126 may be interfaced with enterprise networks 102, 122 for enabling a corporate user to access or effectuate any of the services from a remote location using a suitable mobile communications device 116. A secure communication link with end-to-end encryption may be established that is mediated through an external IP network, i.e., a public packet-switched network such as the Internet 108, as well as the wireless packet data service network 112 operable with mobile communications device 116 via suitable wireless network infrastructure that includes a base station (BS) 114. In one embodiment, a trusted relay network 110 may be disposed between the Internet 108 and the infrastructure of wireless packet data service network 112. Alternatively, the functionality of a relay network may be integrated within the infrastructure of the wireless packet data service network 112. By way of example, mobile communications device 116 may be a data-enabled handheld device capable of receiving and sending messages, web browsing, interfacing with corporate application servers, et cetera.

According to the embodiments disclosed herein, network environment 100 employs encryption algorithms in order to provide for secure communications between certain communication nodes within network environment 100. In certain embodiments, encrypted, secure communications are provided between mobile communication device 116 and at least one of remote service servers 106, 126. Alternate embodiments may employ other secure communication channels between the various communication nodes of the various networks shown.

In order to maintain the security of the encryption employed for secure communication within network environment 100, the encryption keys employed for secure communication may be periodically updated. Although encryption keys are generally not updated for each communication session between two nodes of a network, they could be where security is at a premium.

When encryption is to be updated, a communication node at one end of a secure communication channel requests a new encryption key from the communication node at the other end of the communication channel. Alternately, a user of or application resident on one of the communication nodes may generate an internal key generation request. When such a request is made, there is always the possibility that the communication node receiving the request may be engaged at that time in communication with yet another communication node and therefore unable to address the key generation request at that time. Alternately, the communication node may undergo a reset after receiving the request but before completing the key generation. When such a situation occurs, there is a likelihood that the request for a key update will be lost. If the requesting node or application is not provided with the capability to resubmit the request promptly, the security of the encryption may be compromised.

In order to maintain the integrity of the secure communications between the mobile communication device 116 and other nodes within network environment 100, embodiments of the present disclosure employ a key generation request storage structure designed to capture requests sent to the mobile communication device 116, in order to minimize dropped requests. In mobile communication device 116, the storage structure employed is a storage queue, although alternate embodiments may employ other structures, which may include stacks, linked lists, arrays or any other data structure known to those of skill in the art as being useful for storing such information. Mobile communication device 116 addresses the requests stored within the storage queue in a particular order, which may be a simple "first-in first-out" methodology, or may be a more complex methodology, as the application requires. These and other aspects of the present disclosure are described in further detail below.

For purposes of the present disclosure, the wireless packet data service network 112 may be implemented in any known mobile communications technologies and network protocols. For instance, the wireless packet data service network 112 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 112 may comprise an Enhanced Data Rates for GSM Evolution (EDGE) network, an Integrated Digital Enhanced Network (IDEN), a Code Division Multiple Access (CDMA) network, or any 3rd Generation (3G) network. By way of providing an exemplary embodiment, the teachings of the present disclosure will be illustrated with a GPRS-based carrier network, although those skilled in the art should readily recognize that the scope of the present disclosure is not limited thereby.

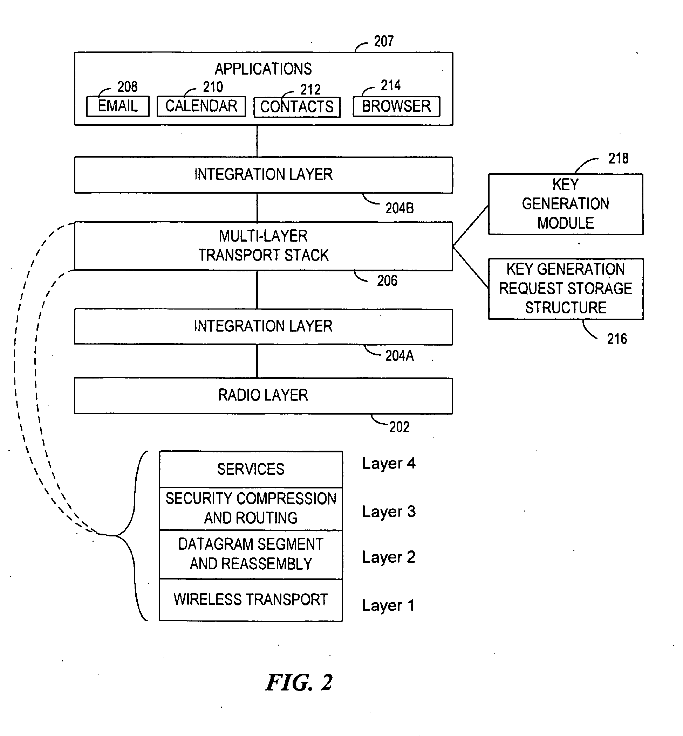

Figure 2 depicts a software architectural view of a mobile communications device according to one embodiment. A multi-layer transport stack (TS) 206 is operable to provide a generic data transport protocol for any type of corporate data, including email, via a reliable, secure and seamless continuous connection to a wireless packet data service network. As illustrated in this embodiment, an integration layer 204A is operable as an interface between the radio layer 202 and the transport stack 206 of mobile communications device 116. Likewise, another integration layer 204B is provided for interfacing between the transport stack 206 and the user applications 207 supported on the mobile communications device 116, e.g., email 208, calendar/scheduler 210, contact management 212 and browser 214. Although not specifically shown, the transport stack 206 may also be interfaced with the operating system of mobile communications device 116. In another implementation, the transport stack 206 may be provided as part of a data communications client module operable as a host-independent virtual machine on a mobile device. As seen in Figure 2, a key generation request storage structure 216 and key generation module 218 are operably connected to multi-layer transport stack 206. The function and operability of key generation request storage structure 216 and key generation module 218 are described in detail below.

The bottom layer (Layer 1) of the transport stack 206 is operable as an interface to the wireless network's packet layer. Layer 1 handles basic service coordination within the exemplary network environment 100 shown in Figure 1. For example, when a mobile communications device roams from one carrier network to another, Layer 1 verifies that the packets are relayed to the appropriate wireless network and that any packets that are pending from the previous network are rerouted to the current network. The top layer (Layer 4) exposes various application interfaces to the services supported on the mobile communications device. The remaining two layers of the transport stack 206, Layer 2 and Layer 3, are responsible for datagram segmentation/reassembly and security, compression and routing, respectively.

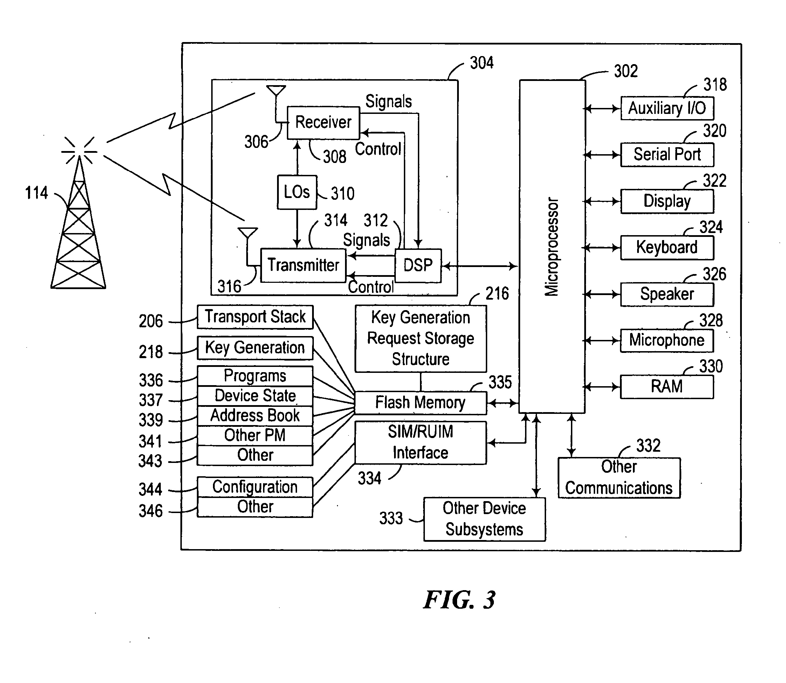

Figure 3 depicts a block diagram of a mobile communications device according to one embodiment. It will be recognized by those skilled in the art upon reference hereto that although an embodiment of mobile communications device 116 may comprise an arrangement similar to one shown in Figure 3, there can be a number of variations and modifications, in hardware, software or firmware, with respect to the various modules depicted. Accordingly, the arrangement of Figure 3 should be taken as illustrative rather than limiting with respect to the embodiments of the present disclosure.

A microprocessor 302 providing for the overall control of an embodiment of mobile communications device 116 is operably coupled to a communication subsystem 304 which includes a receiver 308 and transmitter 314 as well as associated components such as one or more local oscillator (LO) modules 310 and a processing module such as a digital signal processor 312. As will be apparent to those skilled in the field of communications, the particular design of the communication module 304 may be dependent upon the communications network with which the mobile communications device 116 is intended to operate.

In one embodiment, the communication module 304 is operable with both voice and data communications. Regardless of the particular design, however, signals received by antenna 306 through base station 114 are provided to receiver 308, which may perform such common receiver functions as signal amplification, frequency down conversion, filtering, channel selection, analog-to-digital (A/D) conversion, and the like. Similarly, signals to be transmitted are processed, including modulation and encoding, for example, by digital signal processor 312, and provided to transmitter 314 for digital-to-analog (D/A) conversion, frequency up conversion, filtering, amplification and transmission over the air-radio interface via antenna 316.

Microprocessor 302 also interfaces with further device subsystems such as auxiliary input/output (I/O) 318, serial port 320, display 322, keyboard 324, speaker 326, microphone 328, random access memory (RAM) 330, a short-range communications subsystem 332, and any other device subsystems generally labeled as reference numeral 333. To control access, a Subscriber Identity Module (SIM) or Removable User Identity Module (RUIM) interface 334 is also provided in communication with the microprocessor 302.

In one implementation, SIM/RUIM interface 334 is operable with a SIM/RUIM card having a number of key configurations 344 and other information 346 such as identification and subscriber-related data. Operating system software and transport stack software may be embodied in a persistent storage module (i.e., non-volatile storage) such as flash memory 335. In one implementation, flash memory 335 may be segregated into different areas, e.g., storage area for computer programs 336 as well as data storage regions such as device state 337, address book 339, other personal information manager (PIM) data 341, and other data storage areas generally labeled as reference numeral 343. Key generation request storage structure 216 and key generation module 218 are operably connected to flash memory 335, including transport stack 206, as shown. As described in further detail below, key generation request storage structure 216 and key generation module 218 facilitate key generation for secure communication between mobile communication device 116 and communication nodes.

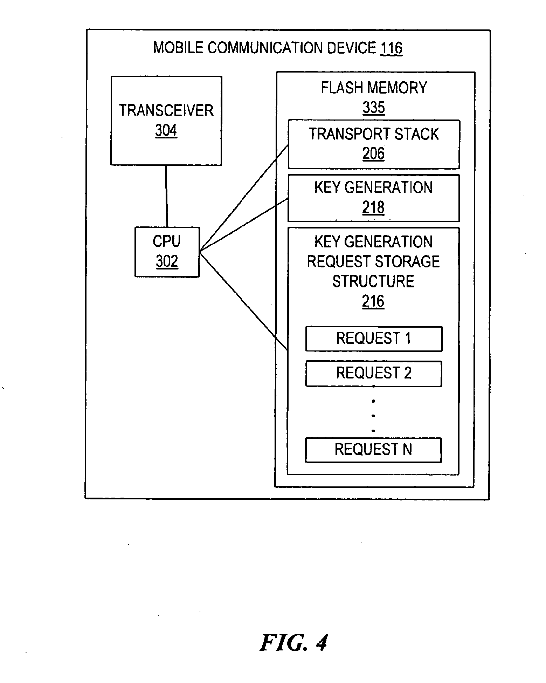

Figure 4 depicts a more detailed view of the flash memory 335 within mobile communication device 116. As shown above in connection with Figure 3, CPU 302 is in operable connection with transceiver 304 and flash memory module 335. Specifically, CPU 302 has access to transport stack 206, key generation request storage structure 216 and key generation module 218 within flash memory 335. Under certain circumstances, a later key generation request may be generated by a second communication node, a user or a resident application while communications with a first communication node are being handled. The communications with the first node may include, for example, a prior key generation request or an over-the-air (OTA) updating session with the first communication node. In such an event, information relating to the later key generation request may be stored in the key generation request storage structure 216 until such time as the transport stack 206 and key generation module 218 are freed up to handle the stored key generation request. The queued up key generation requests are represented by the blocks marked REQUEST 1 through REQUEST N in Figure 4. In general, the pending key generation requests may be handled in a first-in, first-out order, although certain embodiments may, of course, assign multiple levels of priority to different types of key generation requests or key generation requests received from various sources. In certain embodiments, a key generation request will be retained within the key generation request storage structure 216 until the requested key generation is successfully completed.

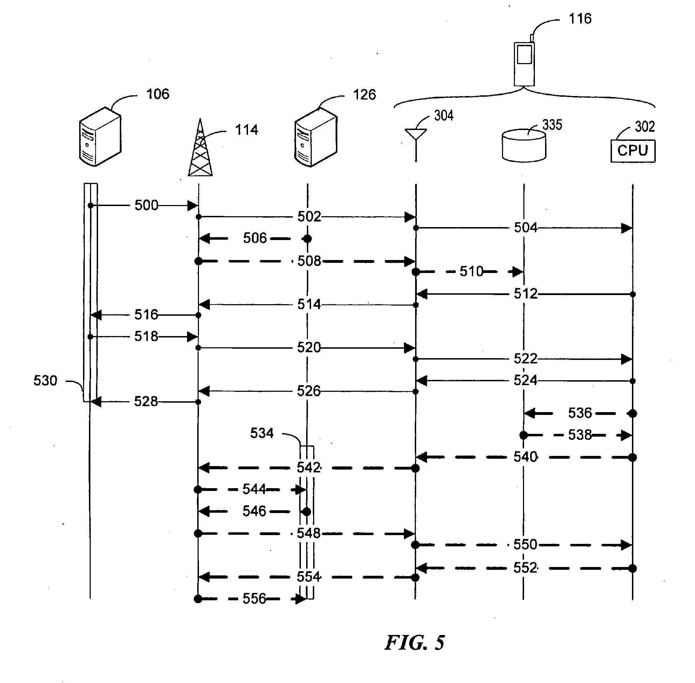

Figure 5 depicts a message flow diagram showing communication between components of environment 100 according to certain embodiments of the present disclosure. Figure 5 depicts certain communications between mobile communication device 116, remote services servers 106, 126 and a base station 114. Those of skill in the art will understand that there may, and generally will, be additional components not explicitly depicted in Figure 5. There will generally be, for example, at least one network disposed between remote services servers 106, 126 and base station 114. Those of skill in the art will understand that these networks have been omitted for the purposes of clarity. Further, those of skill in the art will appreciate that the message flow depicted herein in connection with the two remote services servers 106, 126 would apply in the same manner in connection with three or more remote communications nodes.

At the outset of message flow, remote services server 106 is engaged in a communication session, which may be a key generation session or an OTA updating session, with mobile communication device 116. As part of the communication process, remote services server 106 sends message 500 from remote services server 106 to base station 114, which is forwarded as message 502 from base station 114 to transceiver 304 and message 504 from transceiver 304 to cpu 302 of mobile communication device 116. The content of messages 500, 502, 504 may vary from one embodiment to another, but in one embodiment messages 500, 502, 504 may represent an authentication or "challenge" message from remote services server 106 to mobile communication device 116 which only mobile communication device 116 would be capable of properly responding to. As an example, messages 500, 502, 504, may be encrypted in such a manner that only mobile communication device 116 would feasibly be capable of decrypting them.

While remote services server 106 is engaged in the communication session with mobile communication device 116, remote services server 126 attempts to initiate a key generation session with mobile communication device 116. Although the present disclosure employs the term "key generation" for simplicity, those of skill in the art will appreciate that this term may apply to either an initial key generation or a subsequent key generation. In an attempt to initiate a key generation session, remote services server 126 first sends message 506 from remote services server 126 to base station 114, which is forwarded as message 508 from base station 114 to transceiver 304. Because mobile communication device 116 is already engaged in an existing communication session 530 with remote services server 106, mobile communication device 116 is not able to engage in the requested key generation session with remote services server 126 at this point in time. Mobile communication device 116 will not be free to respond to a key generation request until the existing communication session 530 with remote services server 106 is complete. Accordingly, the key generation request 506 from remote services server 126 is moved, as message 510, from transceiver 304 to memory 335, where it is stored in the key generation request storage structure 216 within memory 335. Although messages 506, 508, 510 represent an external key generation request, essentially the same process to that described above is employed for internal key generation requests originating, for example, from a device user or resident application. As described in detail below, key generation request 506 from remote services server 126 will be handled after the completion of communication session 530 between mobile communication device 116 and remote services server 106.

Having temporarily handled key generation request 506 from remote services server 126 (i.e., a second communication node), mobile communication device 116 can complete communication session 530 with remote services server 106 (i.e., the first communication node). Mobile communication device 116 generates message 512 from cpu 302 to transceiver 304, forwarded as message 514 from transceiver 304 to base station 114 and then message 516 from base station 114 to remote services server 106. The content of this reply communication may vary from one embodiment to another, but in one embodiment messages 512, 514, 516 may represent a response to an encrypted challenge transmitted to mobile communication device 116 by remote services server 106. Where communication session 530 is a key generation session, messages 512, 514, 516 may contain a new encryption key generated by key generation module 218 to be used in future communication with mobile communication device 116.

Upon receipt of message 516, remote services server 106 generates message 518 from remote services server 106 to base station 114, which is forwarded as message 520 from base station 114 to transceiver 304 and message 522 from transceiver 304 to cpu 302. In certain embodiments, this group of messages may represent a second round of authentication. In other embodiments, this group of messages may contain data relating to provisioning or other logistical information. In certain embodiments, this group of messages may be an acknowledgment that mobile communication device 116 has been authenticated by remote services server 106.

Upon receipt of message 522, cpu 302 generates message 524 from cpu 302 to transceiver 304, which is forwarded as message 526 from transceiver 304 to base station 114 and message 528 from base station 114 to remote services server 106. As above, the content of these messages may vary, and may range from basic acknowledgment to detailed operational information. Implementation of any of these embodiments is well within the knowledge of those of skill in the art to which this disclosure pertains.

Delivery of message 528 to remote services server 106 represents completion of communication session 530 between remote services server 106 and mobile communication device 116. Upon completion of communication session 530, mobile communication device 116 is free to respond to key generation request 506 from remote services server 126, which was originally received during communication session 530. In order to respond to key generation request 506, cpu 302 first queries key generation request storage structure 216 for pending key generation requests, as represented by message 536 from cpu 302 to memory 335. Memory 335 responds in the form of message 538 from memory 335 to cpu 302. Under the circumstances shown in Figure 5, message 538 will at least contain information identifying key generation request 506 received from remote services server 126 during the prior communication session 530.

Upon receipt of message 538 identifying key generation request 506 from remote services server 126, cpu 302 initiates key generation session 534 in association with key generation module 218 within mobile communication device 116. Cpu 302 initiates key generation session 534 by generating message 540 from cpu 302 to transceiver 304, which is forwarded as message 542 from transceiver 304 to base station base station 114 and message 544 from base station 114 to remote services server 126.

Upon receipt of message 544, remote services server 126 generates message 546 from remote services server 126 to base station 114, which is forwarded as message 548 from base station 114 to transceiver 304 and message 550 from transceiver 304 to cpu 302. Upon receipt of message 550, cpu 302 generates message 552 from cpu 302 to transceiver 304, which is forwarded as message 554 from transceiver 304 to base station 114 and message 556 from base station 114 to remote services server 126. In certain embodiments, messages 552, 554, 556 will contain a new encryption key generated by key generation module 218 in response to the key generation request by remote services server 126.

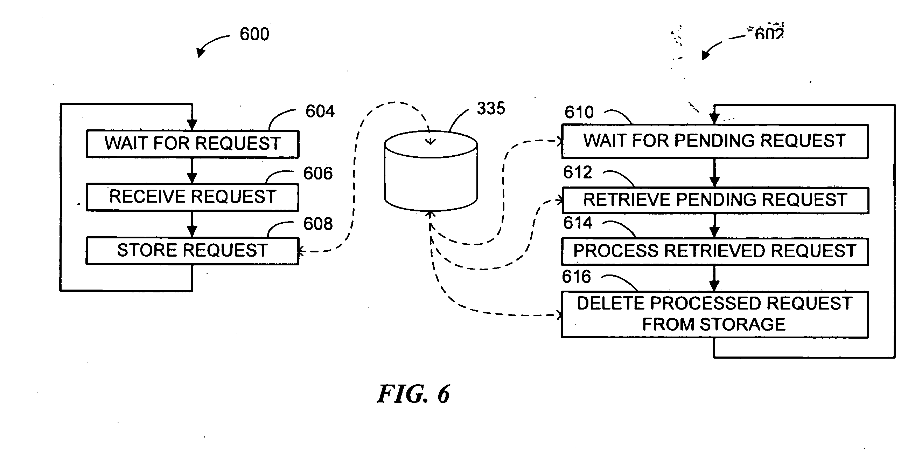

The process of key generation depicted in the message flow of Figure 5 is shown in flowchart form in Figure 6. The overall process is depicted in Figure 6 as two parallel processes 600 and 602 for simplicity, but those of skill in the art will appreciate that the process steps could be combined in a single process flow. Process 600 is the process of key generation request receipt and storage. In block 604, the mobile communications device 116 waits for a key generation request. Any such key generation requests are received in block 606 and then stored in key generation request storage structure 216 within flash memory 335, as shown in block 608. Process flow then returns to block 604, where the device waits for additional key generation requests.

Request handling process 602 runs generally parallel to request receipt process 600 described above. In block 610, the device waits for a pending key generation request to be stored in the key generation request storage structure 216 within flash memory 335. If there is a key generation request stored therein, process flow proceeds to block 612, where a stored key generation request is retrieved from the key generation request storage structure 216 within flash memory 335. If there is more than one key generation request record stored within the key generation request storage structure 216, an algorithm is used in order to determine which record is to be retrieved first. As discussed above, certain embodiments of the present disclosure may employ a simple "first-in, first-out" queueing algorithm. Other embodiments may employ alternate scenarios, which may include sorting or weighting the records according to one or more factors. In the embodiment depicted in Figure 6, the retrieved key generation request record is maintained within flash memory 335 until processing of that record is completed.

The key generation request record retrieved from key generation request storage structure 216 is processed in block 614. As noted above, process 602 runs generally in parallel to process 600. Accordingly, process 600 may in certain cases be adding new requests to key generation request storage structure 216 while process 602 is handling previously stored key generation requests. As also noted above, the key generation request record is generally maintained within flash memory 335 even after it is retrieved for processing. If a device reset or other event occurs interrupting the processing of the retrieved key generation request, process flow will generally return to block 610. Because the key generation request record was previously retained within flash memory 335, the key generation request will again be retrieved from flash memory 335 for processing. In the event of multiple resets or other interruptions, this sequence of steps may repeat multiple times until the key generation request is successfully processed. In certain cases, there may be some reason why a particular key generation request cannot be processed. For this reason, certain embodiments may provide an option for manual deletion of a particular key generation request. Once the key generation request is successfully processed or a manual delete of that record is requested, process flow proceeds to block 616, where the key generation request is deleted from flash memory 335. Process flow then proceeds back to block 610, where the device waits for the existence of other pending key generation requests within flash memory 335.

It is believed that the operation and construction of the embodiments of the present disclosure will be apparent from the Detailed Description set forth above. While the exemplary embodiments shown and described may have been characterized as being preferred, it should be readily understood that various changes and modifications could be made therein without departing from the scope of the present disclosure as set forth in the following claims.

## Claims

1. A mobile communication device (116) comprising:
a storage structure (216) operable to store data relating to a plurality of key generation requests received by the mobile communication device (116);
a logic structure (206) operable to identify a key generation request received from a first network node and to store in the storage structure (216) a record related to the received key generation request, both said identifying and said storing being performed when the mobile communication device is in communication with a second network node; and
a processing unit (302) operable to initiate a key generation session responsive to the received key generation request when the mobile communication device (116) is available.

2. The mobile communication device (116) as recited in claim 1 wherein the logic structure (206) is operable to identify a key generation request received when the mobile communication device (116) is engaged in a key generation session.

3. The mobile communication device (116) as recited in claim 1 wherein the logic structure (206) is operable to identify a key generation request received when the mobile communication device (116) is engaged in wireless communication.

4. The mobile communication device (116) as recited in claim 1 wherein the logic structure (206) is a transport stack.

5. The mobile communication device (116) as recited in claim 1 wherein the logic structure (206) is operable to identify a key generation request received when the mobile communication device (116) is engaged in communication with a remote services server.

6. The mobile communication device (116) as recited in claim 1 wherein the storage structure (216) is a queue.

7. The mobile communication device (116) as recited in claim 1 wherein the mobile communication device (116) further comprises a key generation module (218).

8. The mobile communication device (116) as recited in claim 1 wherein the storage structure (216) orders key generation requests according to one of: a first-in, first out algorithm and a request priority weighting algorithm.

9. The mobile communication device (116) as recited in claim 1 wherein the storage structure (216) is operable to store data relating to each key generation request until a key generation session responsive to that request has been successfully completed and wherein the processing unit (302) is operable to re-initiate a key generation session responsive to the key generation request if a prior key generation session responsive to that key generation session was interrupted.

10. The mobile communication device (116) as recited in claim 1 wherein the processing unit (302) is operable to receive and execute a user instruction to delete a selected key generation request from the storage structure (216).

11. A method for managing key generation for a mobile communication device (116), the method comprising the steps of:
receiving at a mobile communication device (116) a key generation request from a first network node, and storing a record relating to the received key generation request in a storage structure (216) within the mobile communication device (116), both said identifying and said storing being performed when the mobile communication device is in communication with a second network node; and
initiating a key generation session responsive to the received key generation request when the mobile communication device (116) is available.

12. The method as recited in claim 11 wherein the step of receiving at a mobile communication device (116) a key generation request while the mobile communication device (116) is in communication with the second network node comprises receiving at a mobile communication device (116) a key generation request while the mobile communication device (116) is engaged in a key generation session.

13. The method as recited in claim 11 wherein the step of receiving at a mobile communication device (116) a key generation request while the mobile communication device (116) is in communication with the second network node comprises receiving at a mobile communication device (116) a key generation request while the mobile communication device (116) is engaged in a wireless communication session.

14. The method as recited in claim 13 wherein the wireless communication session is an over-the-air provisioning session.

15. The method as recited in claim 11 wherein the step of receiving at a mobile communication device (116) a key generation request while the mobile communication device (116) is in communication with the second network node comprises receiving at a mobile communication device (116) a key generation request while the mobile communication device (116) is engaged in a communication session with a remote services server.

16. The method as recited in claim 11 wherein the storage structure (216) is a queue.

17. The method as recited in claim 11 further comprising the step of generating an encryption key using a key generation module (218) disposed within the mobile communication device (116).

18. The method as recited in claim 11 further comprising the step of ordering key generation requests according to one of: a first-in, first out algorithm and a request priority weighting algorithm.

19. The method as recited in claim 11 further comprising the steps of retaining a record relating to each key generation request until a key generation session responsive to that request has been successfully completed and reinitiating a key generation session responsive to the key generation request if a prior key generation session responsive to that key generation session was interrupted.

20. The method as recited in claim 11 further comprising the steps of: receiving from a user an instruction to delete a selected key generation request from the storage structure (216) and deleting the selected key generation request.

## Patentansprüche

1. Mobile Kommunikationsvorrichtung (116), die aufweist:
eine Speicherstruktur (216), die betriebsfähig ist, Daten zu speichern, die eine Vielzahl von Schlüsselerzeugungsanforderungen betreffen, die durch die mobile Kommunikationsvorrichtung (116) empfangen werden:
eine Logikstruktur (206), die betriebsfähig ist, eine Schlüsselerzeugungsanforderung zu identifizieren, die von einem ersten Netzwerkknoten empfangen wird, und in der Speicherstruktur (216) einen Datensatz zu speichern, der die empfangene Schlüsselerzeugungsanforderung betrifft, wobei sowohl das Identifizieren als auch das Speichern durchgeführt werden, wenn die mobile Kommunikationsvorrichtung in Kommunikation mit einem zweiten Netzwerkknoten steht; und
eine Verarbeitungseinheit (302), die betriebsfähig ist, eine Schlüsselerzeugungssitzung zu initiieren als Reaktion auf die empfangene Schlüsselerzeugungsanforderung, wenn die mobile Kommunikationsverrichtung (116) verfügbar ist.

2. Mobile Kommunikationsvorrichtung (116) gemäß Anspruch 1, wobei die Logikstruktur (206) betriebsfähig ist, eine Schlüsselerzeugsanforderung zu identifizieren, die empfangen wird, wenn die mobile Kommunikationsvorrichtung (116) an einer Schlüsselerzeugungssitzung beteiligt ist.

3. Mobile Kommunikationsvorrichtung (116) gemäß Anspruch 1, wobei die Logikstruktur (206) betriebsfähig ist, eine Schlüsselerzeugungsanforderung zu identifizieren, die empfangen wird, wenn die mobile Kommunikationsvorrichtung (116) an einer drahtlosen Kommunikation beteiligt ist.

4. Mobile Kommunikationsvorrichtung (116) gemäß Anspruch 1, wobei die Logikstruktur (206) ein Transportstapel ist.

5. Mobile Kommunikationsvorrichtung (116) gemäß Anspruch 1, wobei die Logikstruktur (206) betriebsfähig ist, eine Schlüsselerzeugsanforderung zu identifizieren, die empfangen wird, wenn die mobile Kommunikationsvorrichtung (116) an einer Kommunikation mit einem entfernten Dienste-Server beteiligt ist.

6. Mobile Kommunikationsvorrichtung (116) gemäß Anspruch 1, wobei die Speicherstruktur (216) eine Warteschlange ist.

7. Mobile Kommunikationsvorrichtung (116) gemäß Anspruch 1, wobei die mobile Kommunikationsvorrichtung (116) weiter ein Schlüsselerzeugsmodul (218) aufweist.

8. Mobile Kommunikationsvorrichtung (116) gemäß Anspruch 1, wobei die Speicherstruktur (216) Schlüsselerzeugungsanforderungen ordnet gemäß einem aus: einem "first in, first out"-Algorithmus und einem Anforderungsprioritätsgewichtungs-Algorithmus.

9. Mobile Kommunikationsvorrichtung (116) gemäß Anspruch 1, wobei die Speicherstruktur (216) betriebsfähig ist, Daten zu speichern, die jede Schlüsselerzeugungsanforderung betreffen, bis eine Schlüsselerzeugungssitzung als Reaktion auf diese Anforderung erfolgreich abgeschlossen ist, und wobei die Verarbeitungseinheit (302) betriebsfähig ist, eine Schlüsselerzeugungssitzung erneut zu initiieren als Reaktion auf die Schlüsselerzeugungsanforderung, wenn eine frühere Schlüsselerzeugungssitzung als Reaktion auf diese Schlüsselerzeugungssitzung unterbrochen wurde.

10. Mobile Kommunikationsvorrichtung (116) gemäß Anspruch 1, wobei die Verarbeitungseinheit (302) betriebsfähig ist, eine Benutzeranweisungen zum Löschen einer ausgewählten Schlüsselerzeugungsanforderung aus der Speicherstruktur (216) zu empfangen und auszuführen.

11. Verfahren zum Verwalten einer Schlüsselerzeugung für eine mobile Kommunikationsvorrichtung (116), wobei das Verfahren die Schritte aufweist:
Empfangen an einer mobilen Kommunikationsvorrichtung (116) einer Schlüsselerzeugungsanforderung von einem ersten Netzwerkknoten, und Speichern eines Datensatzes, der die empfangene Schlüsselerzeugungsanforderung betrifft, in einer Speicherstruktur (216) in der mobilen Kommunikationsvorrichtung (116), wobei sowohl das Identifizieren als auch das Speichern durchgeführt werden, wenn die mobile Kommunikationsvorrichtung in Kommunikation mit einem zweiten Netzwerkknoten steht; und
Initiieren einer Schlüsselerzeugungssitzung als Reaktion auf die empfangene Schlüsselerzeugungsanforderung, wenn die mobile Kommunikationsvorrichtung (116) verfügbar ist.

12. Verfahren gemäß Anspruch 11, wobei der Schritt des-Empfangens an einer mobilen Kommunikationsvorrichtung (116) einer Schlüsselerzeugungsanforderung, während die mobile Kommunikationsvorrichtung (116) in Kommunikation mit dem zweiten Netzwerkknoten steht, aufweist ein Empfangen an einer mobilen Kommunikationsvorrichtung (116) einer Schlüsselerzeugungsanforderung, während die mobile Kommunikationsvorrichtung (116) an einer Schlüsselerzeugungssitzung beteiligt ist.

13. Verfahren gemäß Anspruch 11, wobei der Schritt des Empfangens an einer mobilen Kommunikationsvorrichtung (116) einer Schlüsselerzeugungsanforderung, während die mobile Kommunikationsvorrichtung (116) in Kommunikation mit dem zweiten Netzwerkknoten steht, aufweist ein Empfangen an einer mobilen Kommunikationsvorrichtung (116) einer Schlüsselerzeugungsanforderung, während die mobile Kommunikationsvorrichtung (116) an einer drahtlosen Kommunikationssitzung beteiligt ist.

14. Verfahren gemäß Anspruch 13, wobei die drahtlose Kommunikationssitzung eine über-die-Luft-Bereitstellungssitzung ist.

15. Verfahren gemäß Anspruch 11, wobei der Schritt des Empfangens an einer mobilen Kommunikationsvorrichtung (116) einer Schlüsselerzeugungsanforderung, während die mobile Kommunikationsvorrichtung (116) in Kommunikation mit dem zweiten Netzwerkknoten steht, aufweist ein Empfangen an einer mobilen Kommunikationsvorrichtung (116) einer Schlüsselerzeugungsanforderung, während die mobile Kommunikationsvorrichtung (116) an einer Kommunikationssitzung mit einem entfernten Dienste-Server beteiligt ist.

16. Verfahren gemäß Anspruch 11, wobei die Speicherstruktur (216) eine Warteschlange ist.

17. Verfahren gemäß Anspruch 11, das weiter aufweist den Schritt eines Erzeugens eines Verschlüsselungsschlüssels unter Verwendung eines Schlüsselerzeugungsmoduls (218), das in der mobilen Kommunikationsvorrichtung (116) angeordnet ist.

18. Verfahren gemäß Anspruch 11, das weiter aufweist den Schritt eines Ordnens von Schlüsselerzeugungsanforderungen gemäß einem aus: einem "first in, first out"-Algorithmus und einem Anforderungsprioritätsgewichtungs-Algorithmus.

19. Verfahren gemäß Anspruch 11. das weiter aufweist die Schritte eines Behaltens eines Datensatzes, der jede Schlüsselerzeugungsanforderung betrifft, bis eine Schlüsselerzeugungssitzung als Reaktion auf diese Anforderung erfolgreich abgeschlossen ist, und ein erneutes Initiieren einer Schlüsselerzeugungssitzung als Reaktion auf die Schlüsselerzeugungsanforderung, wenn eine frühere Schlüsselerzeugungssitzung als Reaktion auf diese Schlüsselerzeugungssitzung unterbrochen wurde.

20. Verfahren gemäß Anspruch 11, das weiter die Schritte aufweist: Empfangen von einem Benutzer einer Anweisung, eine ausgewählte Schlüsselerzeugungsanforderung aus der Speicherstruktur (216) zu löschen, und Löschen der ausgewählten Schlüsselerzeugungsanforderung.

## Revendications

1. Dispositif de communication mobile (116) comportant :
une structure de stockage (216) pouvant être mise en oeuvre pour stocker des données concernant de multiples demandes de génération de clés reçues par le dispositif de communication mobile (116) ;
une structure logique (206) pouvant être mise en oeuvre pour identifier une demande de génération de clés reçues d'un premier noeud de réseau et pour stocker dans la structure de stockage (216) un enregistrement associé à la demande de génération de clés reçues, ladite identification et ledit stockage étant tous deux effectués lorsque le dispositif de communication mobile est en communication avec un second noeud du réseau ; et
une unité de traitement (302) pouvant être mise en oeuvre pour amorcer une session de génération de clés en réponse à la demande de génération de clés reçues lorsque le dispositif de communication mobile (116) est disponible.

2. Dispositif de communication mobile (116) selon la revendication 1, dans lequel la structure logique (206) peut être mise en oeuvre pour identifier une demande de génération de clés reçues lorsque le dispositif de communication mobile (116) est engagé dans une session de génération de clés.

3. Dispositif de communication mobile (116) selon la revendication 1, dans lequel la structure logique (206) peut être mise en oeuvre pour identifier une demande de génération de clés reçues lorsque le dispositif de communication mobile (116) est engagé dans une communication sans fil.

4. Dispositif de communication mobile (116) selon la revendication 1, dans lequel la structure logique (206) est une pile de transport.

5. Dispositif de communication mobile (116) selon la revendication 1, dans lequel la structure logique (206) peut être mise en oeuvre pour identifier une demande de génération de clés reçues lorsque le dispositif de communication mobile (116) est engagé dans une communication avec un serveur de services à distance.

6. Dispositif de communication mobile (116) selon la revendication 1, dans lequel la structure de stockage (216) est une file d'attente.

7. Dispositif de communication mobile (116) selon la revendication 1, lequel dispositif de communication mobile (116) comporte en outre un module (218) de génération de clés.

8. Dispositif de communication mobile (116) selon la revendication 1, dans lequel la structure de stockage (216) ordonne des demandes de génération de clés conformément à l'un de : un algorithme premier entré, premier sorti et un algorithme de pondération de priorité de demande.

9. Dispositif de communication mobile (116) selon la revendication 1, dans lequel la structure de stockage (216) peut être mise en oeuvre pour stocker des données concernant chaque demande de génération de clés jusqu'à ce qu'une session de génération de clés réagissant à cette demande ait été menée à bien avec succès, et dans lequel l'unité de traitement (302) peut être mise en oeuvre pour réamorcer une session de génération de clés réagissant à la demande de génération de clés si une session de génération de clés antérieure réagissant à cette session de génération de clés a été interrompue.

10. Dispositif de communication mobile (116) selon la revendication 1, dans lequel l'unité de traitement (302) peut être mise en oeuvre pour recevoir et exécuter une instruction d'un utilisateur pour supprimer de la structure de stockage (216) une demande de génération de clés sélectionnée.

11. Procédé pour gérer la génération de clés pour un dispositif de communication mobile (116), le procédé comprenant les étapes qui consistent :
à recevoir à un dispositif de communication mobile (116) une demande de génération de clés provenant d'un premier noeud d'un réseau, et à stocker un enregistrement concernant la demande de génération de clés reçues dans une structure de stockage (216) à l'intérieur du dispositif de communication mobile (116), ladite identification et ledit stockage étant tous deux effectués lorsque le dispositif de communication mobile est en communication avec un second noeud du réseau ; et
à amorcer une session de génération de clés en réponse à la demande de génération de clés reçues lorsque le dispositif de communication mobile (116) est disponible.

12. Procédé selon la revendication 11, dans lequel l'étape de réception à un dispositif de communication mobile (116) d'une demande de génération de clés, alors que le dispositif de communication mobile (116) est en communication avec le second noeud du réseau comprend la réception, à un dispositif de communication mobile (116), d'une demande de génération de clés alors que le dispositif de communication mobile (116) est engagé dans une session de génération de clés.

13. Procédé selon la revendication 11, dans lequel l'étape de réception à un dispositif de communication (116) d'une demande de génération de clés, alors que le dispositif de communication mobile (116) est en communication avec le second noeud du réseau, comprend la réception, à un dispositif de communication mobile (116), d'une demande de génération de clés alors que le dispositif de communication mobile (116) est engagé dans une section de communication sans fil.

14. Procédé selon la revendication 13, dans lequel la session de communication sans fil est une session de provisionnement par l'air.

15. Procédé selon la revendication 11, dans lequel l'étape de réception, à un dispositif de communication mobile (116), d'une demande de génération de clés, alors que le dispositif de communication mobile (116) est en communication avec le second noeud du réseau, comprend la réception, à un dispositif de communication mobile (116) d'une demande de génération de clés alors que le dispositif de communication mobile (116) est engagé dans une session de communication avec un serveur de services à distance.

16. Procédé selon la revendication 11, dans lequel la structure de stockage (216) est une file d'attente.

17. Procédé selon la revendication 11, comprenant en outre l'étape de génération d'une clé de cryptage en utilisant un module (218) de génération de clés disposé dans le dispositif de communication mobile (116).

18. Procédé selon la revendication 11, comprenant en outre l'étape consistant à ordonner des demandes de génération de clés en fonction de l'un de : un algorithme premier entré, premier sorti et un algorithme de pondération de priorité de demande.

19. Procédé selon la revendication 11, comprenant en outre les étapes qui consistent à conserver un enregistrement concernant chaque demande de génération de clés jusqu'à ce qu'une session de génération de clés en réponse à cette demande ait été menée à bien avec succès et à réamorcer une session de génération de clés en réponse à la demande de génération de clés si une session de génération de clés antérieure, en réponse à cette session de génération de clés, a été interrompue.

20. Procédé selon la revendication 11, comprenant en outre les étapes qui consistent : à recevoir d'un utilisateur une instruction pour supprimer de la structure de stockage (216) une demande de génération de clés sélectionnées, et à supprimer la demande de génération de clés sélectionnées.
